(19) Europäisches Patentamt
European Patent Office
Office européen des brevets

(11) **EP 4 576 239 A1**

(12) **EUROPEAN PATENT APPLICATION**
published in accordance with Art. 153(4) EPC

(43) Date of publication:
**25.06.2025 Bulletin 2025/26**

(51) International Patent Classification (IPC):
***H01M 4/13*** (2010.01)      ***H01M 4/36*** (2006.01)
***H01M 10/0525*** (2010.01)

(21) Application number: 22956795.3

(22) Date of filing: **30.08.2022**

(52) Cooperative Patent Classification (CPC):
**H01M 4/13; H01M 4/36; H01M 10/0525**

(86) International application number:
**PCT/CN2022/115828**

(87) International publication number:
**WO 2024/044963 (07.03.2024 Gazette 2024/10)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Ningde Amperex Technology Limited
Ningde, Fujian 352100 (CN)**

(72) Inventors:
• JIN, Wenbo
  **Ningde, Fujian 352100 (CN)**
• FENG, Pengyang
  **Ningde, Fujian 352100 (CN)**

(74) Representative: **Icosa
83 avenue Denfert-Rochereau
75014 Paris (FR)**

(54) **NEGATIVE ELECTRODE SHEET, SECONDARY BATTERY, AND ELECTRONIC DEVICE**

(57)    A negative electrode plate includes a negative electrode active material, and the negative electrode active material includes first particles with pores and second particles other than the first particles, where within a 200 $\mu$m $\times$ 200 $\mu$m region of a cross-section of the negative electrode active material layer, the first particles satisfy: $0.10 \leq a/b \leq 0.85$ and $0.89 \leq 0.98 \times C - (a/b)^2 \leq 1.86$, where a $\mu$m represents an average maximum Feret diameter of the pores in the first particles; b $\mu$m represents an average maximum Feret diameter of the first particles; and C g/cm$^3$ represents a compacted density of the negative electrode active material, where $1.65 \leq C \leq 1.95$. The negative electrode plate provided in this application has both a high compacted density and a high porosity.

FIG. 1

EP 4 576 239 A1

**Description**

**TECHNICAL FIELD**

This application relates to the field of energy storage, and specifically, to a negative electrode plate, a secondary battery, and an electronic apparatus.

**BACKGROUND**

As the application market for secondary batteries continues to expand, the requirements for their performance are gradually increasing. For example, in the field of electric tools and drones, secondary batteries are required to have the ability to discharge at high rates, allowing electric tools and drones to exert great power. However, the internal temperature of the secondary battery rises very quickly during high-rate discharge due to its internal resistance, resulting in significant damage to the secondary battery in high-temperature environments. In the prior art, the impedance and discharge temperature rise of the secondary battery are mainly reduced by reducing the coating thickness of the electrode plate and decreasing the particle size of the active material, but this causes an obvious reduction in the energy density of the secondary battery, with a relatively high cost.

**SUMMARY**

In view of the foregoing issues in the prior art, this application provides a negative electrode plate and a secondary battery including the negative electrode plate. A negative electrode active material in the negative electrode plate of this application has both a high compacted density and a high porosity, and this in turn makes the negative electrode plate have excellent infiltration of electrolyte solution and can effectively reduce the impedance and discharge temperature rise of the secondary battery.

According to a first aspect, this application provides a negative electrode plate, including a negative electrode current collector and a negative electrode active material layer disposed on the negative electrode current collector. The negative electrode active material layer includes a negative electrode active material, and the negative electrode active material includes first particles with pores and second particles other than the first particles, where within a 200 $\mu$m $\times$ 200 $\mu$m region of a cross-section of the negative electrode active material layer, the first particles satisfy: $0.10 \leq a/b \leq 0.85$ and $0.89 \leq 0.98 \times C - (a/b)^2 \leq 1.86$, where a $\mu$m represents an average maximum Feret diameter of the pores in the first particles; b $\mu$m represents an average maximum Feret diameter of the first particles; and C g/cm$^3$ represents a compacted density of the negative electrode active material under 5t pressure, where $1.65 \leq C \leq 1.95$. The pores of the negative electrode active material particles can increase the contact area between the active material and an electrolyte solution, and the pores of the negative electrode active material can also increase the capillary absorption effect of the negative electrode plate on the electrolyte solution, facilitating the infiltration and storage of the electrolyte solution. The improved infiltration of the electrolyte solution in the negative electrode plate facilitates the diffusion of active ions, and in addition, the pores present in the negative electrode active material in the negative electrode plate also reduce the distance for active ions to migrate into the negative electrode active material, facilitating rapid deintercalation and intercalation of active ions. All of these can reduce the diffusion impedance of active ions in the secondary battery, thereby improving the temperature rise performance of the secondary battery under the condition of high-rate discharge. However, when a size of the pores in the negative electrode active material is too large, the negative electrode active material may be reduced in mechanical strength and, in turn, be easily damaged during the pressing process of the negative electrode plate. In addition, a too-large size leads to an increased amount of the electrolyte solution required, resulting in an additional increase in the cost of the secondary battery. When a size of the pores in the negative electrode active material is too small, the infiltration of the electrolyte solution in the negative electrode plate is poor, the diffusion of active ions is difficult, and the improvement effect of the discharge temperature rise of the secondary battery is not good. In this application, the average maximum Feret diameter of the pores in the cross-section of the negative electrode active material, the average maximum Feret diameter of the first particles with the pores, and the compacted density of the negative electrode active material under 5t pressure are controlled within the foregoing ranges, such that the compacted density of the negative electrode active material has a good match with the pore structure, and the negative electrode active material has the characteristics of both a high compacted density and a high porosity. This in turn makes the negative electrode plate containing the negative electrode active material have excellent infiltration of the electrolyte solution, and can effectively reduce the migration impedance of solvated active ions and improve the temperature rise performance of the secondary battery at a high rate.

In some embodiments, $0.15 \leq a/b \leq 0.7$. In some embodiments, $0.2 \leq a/b \leq 0.6$. When a size of the pores in the negative electrode active material is too large, the negative electrode active material may be reduced in mechanical strength and, in turn, be easily damaged during the pressing process of the negative electrode plate. In addition, a too-large size leads to an increased amount of the electrolyte solution required, resulting in an additional increase in the cost of the secondary battery. When a size of the pores in the negative electrode active material is too small, the infiltration of the electrolyte solution in the negative electrode plate is poor, the diffusion of active ions is difficult, and the improvement effect of the discharge temperature rise of the secondary battery is not good.

In some embodiments, $0.5 \leq a \leq 13$. When a size of the pores in the negative electrode active material is too large, the negative electrode active material may be reduced in mechanical strength and, in turn, be easily damaged during the pressing process of the negative electrode plate. When a size of the pores in the negative electrode active material is too small, the infiltration of the electrolyte solution in the negative electrode plate is poor, the diffusion of active ions is difficult, and the improvement effect of the discharge temperature rise of the secondary battery is not good. In some embodiments, $1 \leq a \leq 10$.

In some embodiments, $4 \leq b \leq 25$. When the particle size of active particles with pores is within this range, the infiltration of the electrolyte solution can be ensured, the compacted density of the negative electrode plate can be increased, the diffusion of active ions can be improved, and the high-rate discharge performance of secondary batteries can be improved. In some embodiments, $4.5 \leq b \leq 16$.

In some embodiments, $1.2 \leq 0.98 \times C - (a/b)^2 \leq 1.86$. In some embodiments, $1.3 \leq 0.98 \times C - (a/b)^2 \leq 1.8$. With the average maximum Feret diameter of the pores in the cross-section of the negative electrode active material, the average maximum Feret diameter of the first particles with the pores, and the compacted density of the negative electrode active material under 5t pressure being within the foregoing ranges, the temperature rise performance of the secondary battery at a high rate can be further improved.

In some embodiments, $1.65 \leq C \leq 1.95$. The compacted density of the negative electrode active material is related to the energy density and kinetics of the secondary battery. When the compacted density of the negative electrode active material is low, the compacted density of the electrode plate is also low, and the energy density of a corresponding secondary battery also decreases. When the compacted density of the negative electrode active material is too high, the kinetics of the secondary battery deteriorates, affecting the performance of the battery at a high rate. In some embodiments, $1.7 \leq C \leq 1.9$.

In some embodiments, within the 200 μm × 200 μm region of the cross-section of the negative electrode active material layer, a quantity of the first particles with pores accounts for 35% to 95% of a sum of the quantity of the first particles and a quantity of the second particles. When the proportion of active material particles with pores is too small, the negative electrode plate has a relatively small pore structure and a poor absorption capacity of the electrolyte solution, such that the diffusion of active ions is difficult, and the improvement effect of the discharge temperature rise of the secondary battery is not good. When the proportion of active material particles with pores is too large, the mechanical strength of the negative electrode active material is not enough, and the negative electrode active material particles are easily damaged when the negative electrode plate is pressed, resulting in its performance loss. In addition, if the proportion is too large, side reactions between the negative electrode active material and the electrolyte solution also increase obviously, thereby affecting storage and cycling performance of the secondary battery. In some embodiments, the quantity of the first particles accounts for 50% to 80% of the sum of the quantity of the first particles and the quantity of the second particles.

In some embodiments, within the 200 μm × 200 μm region of the cross-section of the negative electrode active material layer, in Raman testing, the negative electrode active material layer satisfies: $0.1 \leq ID/IG \leq 0.5$, where ID is an intensity of a peak at 1350 cm$^{-1}$ in a Raman spectrum, and IG is an intensity of a peak at 1580 cm$^{-1}$ in the Raman spectrum. The ID/IG ratio can characterize the defect degree of the negative electrode active material layer, and a greater ID/IG ratio indicates a higher defect degree. The negative electrode active material layer with a high defect degree has a high degree of disorder in its internal atomic arrangement and more lattice defects, and this is conducive to increasing channels for de-intercalation and intercalation of active ions and improving the speed for de-intercalation and intercalation of active ions, so that the kinetics of the negative electrode active material can be significantly improved. However, too many defects can affect the initial efficiency, cycling, storage performance, and the like of the secondary battery. In some embodiments, $0.2 \leq ID/IG \leq 0.45$.

In some embodiments, an orientation index OI of the negative electrode plate satisfies: $OI \leq 35$. The OI value of the negative electrode plate is a parameter reflecting the orientation index of grain crystals in the electrode plate. A higher OI value indicates a higher crystal orientation index and that surfaces for de-intercalation and intercalation of active ions on the active material in the electrode plate is more limited. A smaller OI value indicates a lower crystal orientation index and that the active ions can be de-intercalated and intercalated from multiple directions on the active material in the electrode plate. In this application, with the OI value of the negative electrode plate limited within the foregoing range, the active ions can quickly deintercalate and intercalate in the negative electrode plate, and the impedance and discharge temperature rise of the secondary battery can be further reduced. In some embodiments, $15 \leq OI \leq 25$.

In some embodiments, a porosity K of the negative electrode plate satisfies: $15\% \leq K \leq 50\%$. When the porosity is too small, the diffusion impedance of active ions is large, and the improvement effect of discharge temperature rise of secondary batteries is not good. When the porosity is too large, the compacted density of the electrode plate is too low, the energy density of the secondary battery is too low, and the amount of the electrolyte solution required increases, resulting in an additional increase in the cost of the secondary battery. In some embodiments, $20\% \leq K \leq 40\%$.

In some embodiments, a thickness H of the negative electrode plate satisfies: $H \leq 220$ $\mu$m. When the thickness of the negative electrode plate is too high, the thickness of the negative electrode active material layer is too high. This in turn increases the distance for active ions to diffuse from the electrolyte solution to the active material particles inside the negative electrode plate, so that the secondary battery is prone to lithium precipitation in high-rate charging. In addition, the increased distance also increases the charge transfer impedance and affects the discharge temperature rise of the secondary battery. In some embodiments, 50 $\mu$m $\leq H \leq 200$ $\mu$m.

In some embodiments, a graphitization degree G of the negative electrode active material satisfies: $92\% \leq G \leq 98\%$. A negative electrode active material with high graphitization degree has a high capacity and a high compacted density.

In some embodiments, a gram capacity Cap of the negative electrode active material satisfies: $Cap \geq 330$ mAh/g.

In some embodiments, a specific surface area BET of the negative electrode active material satisfies: 1.0 m$^2$/g $\leq$ BET $\leq 4.5$ m$^2$/g. When the specific surface area is too large, the negative electrode active material with high surface reaction activity is prone to reacting with the electrolyte solution, adversely affecting the storage performance of the secondary battery.

In some embodiments, the negative electrode active material includes graphite. In some embodiments, the negative electrode active material includes natural graphite.

According to a second aspect, this application provides a secondary battery, including the negative electrode plate according to the first aspect.

In some embodiments, an impedance DCR of the secondary battery when discharged to 50% SOC at 0°C 1C satisfies: DCR $\leq 55.0$ m$\Omega$. In some embodiments, when the secondary battery is discharged at 25°C 3C, the temperature rise T satisfies: $T \leq 8.0$°C.

According to a third aspect, this application provides an electronic apparatus, including the secondary battery according to the second aspect.

The negative electrode active material in the negative electrode plate provided in this application has both a high compacted density and a high porosity. This in turn makes the negative electrode plate containing the negative electrode active material has excellent infiltration of the electrolyte solution, and can effectively reduce the migration impedance of solvated active ions and improve the temperature rise performance of the secondary battery at a high rate.

## BRIEF DESCRIPTION OF DRAWINGS

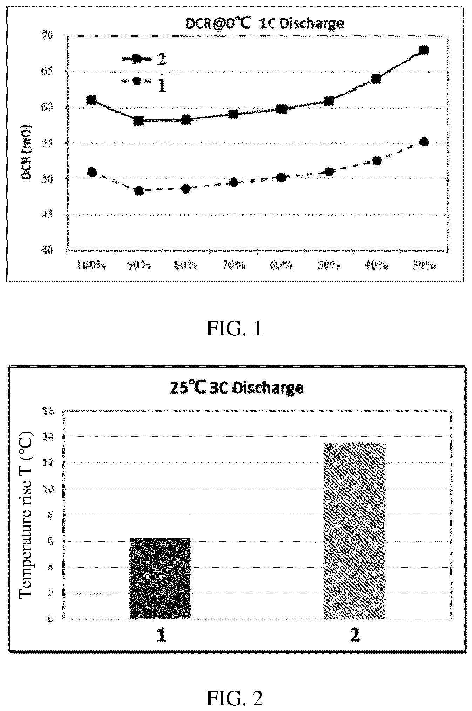

FIG. 1 shows DCR values of secondary batteries in Example 2 and Comparative example 1, in which 1 represents Example 2, and 2 represents Comparative example 1.

FIG. 2 shows temperature rises of secondary batteries in Example 2 and Comparative example 1, in which 1 represents Example 2, and 2 represents Comparative example 1.

## DETAILED DESCRIPTION

For brevity, this specification specifically discloses only some numerical ranges. However, any lower limit may be combined with any upper limit to form a range not expressly recorded; any lower limit may be combined with any other lower limit to form a range not expressly recorded; and any upper limit may be combined with any other upper limit to form a range not expressly recorded. In addition, each individually disclosed point or individual single numerical value may itself be a lower limit or an upper limit which can be combined with any other point or individual numerical value or combined with another lower limit or upper limit to form a range not expressly recorded.

In the descriptions of this specification, "more than" or "less than" is inclusive of the present quantity unless otherwise specified.

Unless otherwise specified, the terms used in this application have well known meanings as commonly understood by persons skilled in the art. Unless otherwise specified, numerical values of parameters mentioned in this application may be measured by using various measurement methods commonly used in the art (for example, they may be tested by using the methods provided in the embodiments of this application).

A list of items connected by the terms "at least one of", "at least one piece of", "at least one kind of", or the like may mean any combination of the listed items. For example, if items A and B are listed, the phrase "at least one of A and B" means only A; only B; or A and B. In another example, if items A, B, and C are listed, the phrase "at least one of A, B, and C" means only A, only B, only C, A and B (excluding C), A and C (excluding B), B and C (excluding A), or all of A, B, and C. The item A may contain a single composition or a plurality of compositions. The item B may contain a single composition or a plurality of compositions. The item C may contain a single composition or a plurality of compositions.

The following further describes this application with reference to specific embodiments. It should be understood that these specific embodiments are merely intended to illustrate this application but not to limit the scope of this application.

I. Negative electrode plate

According to a first aspect, this application provides a negative electrode plate, including a negative electrode current collector and a negative electrode active material layer disposed on the negative electrode current collector. The negative electrode active material layer includes a negative electrode active material, and the negative electrode active material includes first particles with pores and second particles other than the first particles, where within a 200 $\mu$m × 200 $\mu$m region of a cross-section of the negative electrode active material layer, the first particles satisfy: $0.10 \le a/b \le 0.85$ and $0.89 \le 0.98 \times C - (a/b)2 \le 1.86$, where $a$ $\mu$m represents an average maximum Feret diameter of the pores in the first particles; $b$ $\mu$m represents an average maximum Feret diameter of the first particles; and $C$ g/cm$^3$ represents a compacted density of the negative electrode active material under 5t pressure, where $1.65 \le C \le 1.95$. The pores of the negative electrode active material particles can increase the contact area between the active material and an electrolyte solution, and the pores of the negative electrode active material can also increase the capillary absorption effect of the negative electrode plate on the electrolyte solution, facilitating the infiltration and storage of the electrolyte solution. The improved infiltration of the electrolyte solution in the negative electrode plate facilitates the diffusion of active ions, and in addition, the pores present in the negative electrode active material in the negative electrode plate also reduce the distance for active ions to migrate into the negative electrode active material, facilitating rapid deintercalation and intercalation of active ions. All of these can reduce the diffusion impedance of active ions in the secondary battery, thereby improving the temperature rise performance of the secondary battery under the condition of high-rate discharge. However, when a size of the pores in the negative electrode active material is too large, the negative electrode active material may be reduced in mechanical strength and, in turn, be easily damaged during the pressing process of the negative electrode plate. In addition, a too-large size leads to an increased amount of the electrolyte solution required, resulting in an additional increase in the cost of the secondary battery. When a size of the pores in the negative electrode active material is too small, the infiltration of the electrolyte solution in the negative electrode plate is poor, the diffusion of active ions is difficult, and the improvement effect of the discharge temperature rise of the secondary battery is not good. In this application, the average maximum Feret diameter $a$ of the pores in the cross-section of the negative electrode active material, the average maximum Feret diameter $b$ of the first particles with the pores, and the compacted density $C$ of the negative electrode active material under 5t pressure are controlled within the foregoing ranges, such that the compacted density of the negative electrode active material has a good match with the pore structure, and the negative electrode active material has the characteristics of both a high compacted density and a high porosity. This in turn makes the negative electrode plate containing the negative electrode active material have excellent infiltration of the electrolyte solution, and can effectively reduce the migration impedance of solvated active ions and improve the temperature rise performance of the secondary battery at a high rate.

In this application, the "cross-section of the negative electrode active material layer" may be a cross-section along the thickness direction of the negative electrode active material layer.

In some embodiments, $a/b$ is 0.13, 0.17, 0.19, 0.21, 0.23, 0.25, 0.27, 0.3, 0.33, 0.35, 0.37, 0.4, 0.43, 0.45, 0.57, 0.5, 0.53, 0.55, 0.57, 0.59, 0.63, 0.65, 0.67, 0.69, 0.73, 0.75, 0.77, 0.8, 0.83, or in a range of any two of these values. In some embodiments, $0.15 \le a/b \le 0.7$. In some embodiments, $0.2 \le a/b \le 0.6$. When a size of the pores in the negative electrode active material is too large, the negative electrode active material may be reduced in mechanical strength and, in turn, be easily damaged during the pressing process of the negative electrode plate. In addition, a too-large size leads to an increased amount of the electrolyte solution required, resulting in an additional increase in the cost of the secondary battery. When a size of the pores in the negative electrode active material is too small, the infiltration of the electrolyte solution in the negative electrode plate is poor, the diffusion of active ions is difficult, and the improvement effect of the discharge temperature rise of the secondary battery is not good.

In some embodiments, $0.5 \le a \le 13$. In some embodiments, $a$ is 0.7, 1.5, 2.0, 2.5, 3.0, 3.5, 4.0, 4.5, 5.0, 5.5, 6.0, 6.5, 7.0, 7.5, 8.0, 8.5, 9.0, 9.5, 10.0, 10.5, 11.0, 11.5, 12.0, 12.5, or in a range of any two of these values. When a size of the pores in the negative electrode active material is too large, the negative electrode active material may be reduced in mechanical strength and, in turn, be easily damaged during the pressing process of the negative electrode plate. When a size of the pores in the negative electrode active material is too small, the infiltration of the electrolyte solution in the negative electrode plate is poor, the diffusion of active ions is difficult, and the improvement effect of the discharge temperature rise of the secondary battery is not good. In some embodiments, $1 \le a \le 10$.

In some embodiments, $4 \le b \le 25$. In some embodiments, $b$ is 5, 6, 7, 8, 9, 10, 11, 12, 13, 14, 15, 16, 17, 18, 19, 20, 21, 22, 23, 24, or in a range of any two of these values. In some embodiments, $4 \le b \le 18$. In some embodiments, $4.5 \le b \le 16$.

In some embodiments, $0.98 \times C - (a/b)^2$ is 0.9, 0.93, 0.95, 0.97, 1.0, 1.03, 1.05, 1.07, 1.1, 1.13, 1.15, 1.17, 1.2, 1.23, 1.25, 1.27, 1.3, 1.33, 1.35, 1.37, 1.4, 1.43, 1.45, 1.47, 1.5, 1.53, 1.55, 1.57, 1.6, 1.63, 1.65, 1.67, 1.7, 1.73, 1.75, 1.77, 1.8, 1.83, 1.85, or in a range of any two of these values. In some embodiments, $1.2 \le 0.98 \times C - (a/b)^2 \le 1.86$. In some

embodiments, $1.3 \leq 0.98 \times C - (a/b)^2 \leq 1.8$. With the average maximum Feret diameter of the pores in the cross-section of the negative electrode active material, the average maximum Feret diameter of the first particles with the pores, and the compacted density of the negative electrode active material under 5t pressure being within the foregoing ranges, the temperature rise performance of the secondary battery at a high rate can be further improved.

In some embodiments, C is 1.67, 1.7, 1.73, 1.75, 1.77, 1.8, 1.83, 1.85, 1.87, 1.9, 1.93, or in a range of any two of these values. In some embodiments, $1.65 \leq C \leq 1.95$. In some embodiments, $1.7 \leq C \leq 1.9$. The compacted density of the negative electrode active material is related to the energy density and kinetics of the secondary battery. When the compacted density of the negative electrode active material is low, the compacted density of the electrode plate is also low, and the energy density of a corresponding secondary battery also decreases. When the compacted density of the negative electrode active material is too high, the kinetics of the secondary battery deteriorates, affecting the performance of the battery at a high rate.

In some embodiments, within the 200 μm × 200 μm region of the cross-section of the negative electrode active material layer, a quantity of the first particles with pores accounts for 35% to 95% of a sum of the quantity of the first particles and a quantity of the second particles, such as 40%, 43%, 45%, 47%, 49%, 53%, 55%, 57%, 60%, 63%, 65%, 67%, 70%, 73%, 75%, 77%, 79%, 83%, 85%, 87%, 90%, 93%, or in a range of any two of these values. When the proportion of active material particles with pores is too small, the negative electrode plate has a relatively small pore structure and a poor absorption capacity of the electrolyte solution, such that the diffusion of active ions is difficult, and the improvement effect of the discharge temperature rise of the secondary battery is not good. When the proportion of active material particles with pores is too large, the mechanical strength of the negative electrode active material is not enough, and the negative electrode active material particles are easily damaged when the negative electrode plate is pressed, resulting in its performance loss. In addition, if the proportion is too large, side reactions between the negative electrode active material and the electrolyte solution also increase obviously, thereby affecting storage and cycling performance of the secondary battery. In some embodiments, the quantity of the first particles accounts for 50% to 80% of the sum of the quantity of the first particles and the quantity of the second particles.

In some embodiments, within the 200 μm × 200 μm region of the cross-section of the negative electrode active material layer, in Raman testing, the negative electrode active material layer satisfies: $0.1 \leq ID/IG \leq 0.5$, where ID is an intensity of a peak at 1350 cm$^{-1}$ in a Raman spectrum, and IG is an intensity of a peak at 1580 cm$^{-1}$ in the Raman spectrum. The ID/IG ratio can characterize the defect degree of the negative electrode active material layer, and a greater ID/IG ratio indicates a higher defect degree. The negative electrode active material layer with a high defect degree has a high degree of disorder in its internal atomic arrangement and more lattice defects, and this is conducive to increasing channels for de-intercalation and intercalation of active ions and improving the speed for de-intercalation and intercalation of active ions, so that the kinetics of the negative electrode active material can be significantly improved. However, too many defects can affect the initial efficiency, cycling, storage performance, and the like of the secondary battery. In some embodiments, ID/IG is 0.15, 0.17, 0.23, 0.25, 0.3, 0.33, 0.35, 0.37, 0.4, 0.43, 0.47, or in a range of any two of these values. In some embodiments, $0.2 \leq ID/IG \leq 0.45$.

In some embodiments, an orientation index OI of the negative electrode plate satisfies: $OI \leq 35$. The OI value of the negative electrode plate is a parameter reflecting the orientation index of grain crystals in the electrode plate. A higher OI value indicates a higher crystal orientation index and that surfaces for de-intercalation and intercalation of active ions on the active material in the electrode plate is more limited. A smaller OI value indicates a lower crystal orientation index and that the active ions can be de-intercalated and intercalated from multiple directions on the active material in the electrode plate. In this application, with the OI value of the negative electrode plate limited within the foregoing range, the active ions can quickly deintercalate and intercalate in the negative electrode plate, and the impedance and discharge temperature rise of the secondary battery can be further reduced. In some embodiments, OI is 10, 12, 14, 16, 18, 20, 22, 24, 26, 28, 30, 32, 34, or in a range of any two of these values. In some embodiments, $OI \leq 25$. In some embodiments, $15 \leq OI \leq 25$.

In some embodiments, a porosity K of the negative electrode plate satisfies: $15\% \leq K \leq 50\%$. When the porosity is too small, the diffusion impedance of active ions is large, and the improvement effect of discharge temperature rise of secondary batteries is not good. When the porosity is too large, the compacted density of the electrode plate is too low, the energy density of the secondary battery is too low, and the amount of the electrolyte solution required increases, resulting in an additional increase in the cost of the secondary battery. In some embodiments, K is 17%, 19%, 23%, 25%, 27%, 30%, 33%, 35%, 37%, 39%, 43%, 45%, 47%, 49%, or in a range of any two of these values. In some embodiments, $20\% \leq K \leq 40\%$.

In some embodiments, a thickness H of the negative electrode plate satisfies: $H \leq 220$ μm. When the thickness of the negative electrode plate is too high, the thickness of the negative electrode active material layer is too high. This in turn increases the distance for active ions to diffuse from the electrolyte solution to the active material particles inside the negative electrode plate, so that the secondary battery is prone to lithium precipitation in high-rate charging. In addition, the increased distance also increases the charge transfer impedance and affects the discharge temperature rise of the secondary battery. In some embodiments, H is 30 μm, 60 μm, 70 μm, 80 μm, 90 μm, 100 μm, 110 μm, 120 μm, 130 μm, 140 μm, 150 μm, 160 μm, 170 μm, 180 μm, 190 μm, 210 μm, or in a range of any two of these values. In some

embodiments, 50 $\mu$m $\leq$ H $\leq$ 200 $\mu$m.

In some embodiments, a graphitization degree G of the negative electrode active material satisfies: 92% $\leq$ G $\leq$ 98%. For example, G is 93%, 94%, 95%, 96%, or 97%. A negative electrode active material with high graphitization degree has a high capacity and a high compacted density.

In some embodiments, a gram capacity Cap of the negative electrode active material satisfies: Cap $\geq$ 330 mAh/g. In some embodiments, 330 mAh/g $\leq$ Cap $\leq$ 500 mAh/g. In some embodiments, 330 mAh/g $\leq$ Cap $\leq$ 450 mAh/g. In some embodiments, 330 mAh/g $\leq$ Cap $\leq$ 400 mAh/g.

In some embodiments, a specific surface area BET of the negative electrode active material satisfies: 1.0 m$^2$/g $\leq$ BET $\leq$ 4.5 m$^2$/g. In some embodiments, BET is 1.3 m$^2$/g, 1.5 m$^2$/g, 1.7 m$^2$/g, 2.0 m$^2$/g, 2.3 m$^2$/g, 2.5 m$^2$/g, 2.7 m$^2$/g, 3.0 m$^2$/g, 3.3 m$^2$/g, 3.5 m$^2$/g, 3.7 m$^2$/g, 4.0 m$^2$/g, 4.3 m$^2$/g, or in a range of any two of these values. When the specific surface area is too large, the negative electrode active material with high surface reaction activity is prone to reacting with the electrolyte solution, adversely affecting the storage performance of the secondary battery.

In some embodiments, the negative electrode active material includes graphite. In some embodiments, the negative electrode active material includes natural graphite.

In some embodiments, a process for preparation of graphite includes: selecting an artificial graphite with a graphitization degree of 92.0% to 95.0% to mix with a flake graphite, where the flake graphite accounts for a mass percentage of 10% to 80%; then mixing with a pore-forming agent such as sodium carbonate with a graphite mass percentage of 2% to 6%, to obtain a resulting mixture; and finally adding asphalt to the mixture for coating treatment, where the asphalt accounts for 10% to 20% of the mixture mass, for example. The treated mixture is ball-milled to polymerize and spheroidize the particles, and the pore-forming agent has been distributed in the particles after spheroidization. After ball milling, the mixture is subjected to carbonization of asphalt and decomposition of the pore-forming agent at high temperature of 800°C to 1200°C. At high temperature, the pore-forming agent decomposes and produces gas expansion, causing deformation of particles and formation of pores inside.

II. Secondary battery

According to a second aspect, this application provides a secondary battery, including the negative electrode plate according to the first aspect.

In some embodiments, an impedance DCR of the secondary battery when discharged to 50% SOC at 0°C 1C satisfies: DCR $\leq$ 55.0 m$\Omega$. In some embodiments, when the secondary battery is discharged at 25°C 3C, the temperature rise T satisfies: T $\leq$ 8.0°C.

In some embodiments, the negative electrode current collector includes copper foil, aluminum foil, nickel foil, stainless steel foil, titanium foil, foamed nickel, foamed copper, polymer base coated with conductive metal, or a combination thereof.

In some embodiments, the negative electrode active material layer further includes a binder and a conductive agent. In some embodiments, the binder includes but is not limited to polyvinyl alcohol, hydroxypropyl cellulose, diacetyl cellulose, polyvinyl chloride, carboxylated polyvinyl chloride, polyvinyl fluoride, ethyleneoxy-containing polymers, polyvinylpyrrolidone, polyurethane, polytetrafluoroethylene, polyvinylidene difluorid, polyethylene, polypropylene, styrene-butadiene rubber, acrylic (acrylate) styrene-butadiene rubber, epoxy resin, nylon, or the like.

In some embodiments, the conductive agent includes but is not limited to carbon-based materials, metal-based materials, conductive polymer, and a mixture thereof. In some embodiments, the carbon-based material is selected from natural graphite, artificial graphite, carbon black, acetylene black, Ketjen black, carbon fibers, or any combination thereof. In some embodiments, the metal-based material is selected from metal powder, metal fiber, copper, nickel, aluminum, or silver. In some embodiments, the conductive polymer is a polyphenylene derivative.

The secondary battery of this application further includes a positive electrode, where the positive electrode includes a positive electrode current collector and a positive electrode active material layer, and the positive electrode active material layer includes a positive electrode active material, a binder, and a conductive agent.

According to some embodiments of this application, the positive electrode current collector may be a metal foil current collector or a composite current collector. For example, an aluminum foil can be used. The composite current collector may be formed by forming a metal material (copper, copper alloy, nickel, nickel alloy, titanium, titanium alloy, silver, silver alloy, or the like) on a polymer matrix.

According to some embodiments of this application, the positive electrode active material includes at least one of lithium cobaltate, lithium nickel manganese cobaltate, lithium nickel manganese aluminate, lithium iron phosphate, lithium vanadium phosphate, lithium cobalt phosphate, lithium manganese phosphate, lithium iron manganese phosphate, lithium iron silicate, lithium vanadium silicate, lithium cobalt silicate, lithium manganese silicate, spinel lithium manganate, spinel lithium nickel manganate, and lithium titanate. In some embodiments, the binder includes a binder polymer, such as at least one of polyvinylidene fluoride, polytetrafluoroethylene, polyolefins, sodium carboxymethyl cellulose, lithium carboxymethyl cellulose, modified polyvinylidene fluoride, modified SBR rubber, or polyurethane. In some embodiments, the polyolefin binder includes at least one of polyethylene, polypropylene, polyene ester, polyene alcohol, or polyacrylic acid. In some embodiments, the conductive agent includes: a carbon-based material such as natural graphite, artificial graphite, carbon black, acetylene black, Ketjen black, or carbon fiber; a metal-based material such as metal powder or metal fiber of copper, nickel, aluminum, or silver; a conductive polymer such as a polyphenylene derivative; or any mixture thereof.

The secondary battery of this application also includes a separator. The separator used in the secondary battery of this application is not particularly limited to any material or shape, and may be based on any technology disclosed in the prior art. In some embodiments, the separator includes a polymer or an inorganic substance formed by a material stable to the electrolyte solution of this application.

For example, the separator may include a substrate layer and a surface treatment layer. The substrate layer is a non-woven fabric, a membrane, or a composite membrane having a porous structure, and a material of the substrate layer is at least one selected from polyethylene, polypropylene, polyethylene terephthalate, or polyimide. Specifically, a polypropylene porous membrane, a polyethylene porous membrane, a polypropylene non-woven fabric, a polyethylene non-woven fabric, or a polypropylene-polyethylene-polypropylene porous composite membrane may be selected.

The surface treatment layer is provided on at least one surface of the substrate layer, and the surface treatment layer may be a polymer layer or an inorganic layer, or may be a layer formed by a mixed polymer and an inorganic substance. The inorganic substance layer includes inorganic particles and the binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, a vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene. The polymer layer includes a polymer, and a material of the polymer is selected from at least one of polyamide, polyacrylonitrile, an acrylate polymer, polyacrylic acid, polyacrylate, polyvinylpyrrolidone, polyvinyl ether, polyvinylidene fluoride, or poly(vinylidene fluoride-hexafluoropropylene).

The secondary battery of this application further includes an electrolyte solution. The electrolyte solution that can be used in this application may be an electrolyte solution known in the prior art.

According to some embodiments of this application, the electrolyte solution includes an organic solvent, a lithium salt, and an optional additive. The organic solvent of the electrolyte solution in this application may be any organic solvent known in the prior art that can be used as a solvent of the electrolyte solution. An electrolyte used in the electrolyte solution according to this application is not limited, and may be any electrolyte known in the prior art. The additive of the electrolyte solution according to this application may be any additive that is known in the prior art and that may be used as an additive of the electrolyte solution. In some embodiments, the organic solvent includes, but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, such as at least one of 1,3-dioxolane (DOL) and ethylene glycol dimethyl ether (DME). In some embodiments, the lithium salt includes at least one of an organic lithium salt or an inorganic lithium salt. In some embodiments, the lithium salt includes but is not limited to lithium hexafluorophosphate (LiPF$_6$), lithium tetrafluoroborate (LiBF$_4$), lithium difluorophosphate (LiPO$_2$F$_2$), lithium bistrifluoromethanesulfonimide LiN(CF$_3$SO$_2$)$_2$ (LiTFSI), lithium bis(fluorosulfonyl)imide Li(N(SO$_2$F)$_2$) (LiFSI), lithium bis(oxalate) borate LiB(C$_2$O$_4$)$_2$ (LiBOB), or lithium difluoro(oxalato)borate LiBF$_2$(C$_2$O$_4$) (LiDFOB). In some embodiments, the additive includes at least one of fluoroethylene carbonate and adiponitrile.

According to some embodiments of this application, the secondary batteries of this application include but are not limited to lithium-ion batteries or sodium-ion batteries. In some embodiments, the secondary batteries include lithium-ion batteries.

III. Electronic apparatus

This application further provides an electronic apparatus, including the secondary battery according to the second aspect of this application.

The electronic device or apparatus in this application is not particularly limited. In some embodiments, the electronic device of this application includes, but is not limited to: a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notebook, a calculator, a memory card, a portable recorder, a radio, a standby power source, a motor, an automobile, a motorcycle, a motor bicycle, a bicycle, a lighting appliance, a toy, a game console, a clock, an electric tool, a flash lamp, a camera, a large household battery, a lithium-ion capacitor, or the like.

In the following examples and comparative examples, all reagents, materials, and instruments used are commercially available unless otherwise specified.

**Examples and comparative examples**

**Example 1**

Preparation of negative electrode active material

100 kg of a selected artificial graphite with a graphitization degree of 93.5% was mixed with 50 kg of a flake graphite, then mixed with 4 kg of pore-forming agent sodium carbonate with a graphite mass; a resulting mixture was stirred for 2 hours, and after mixing well, 20 kg of asphalt was added for mixing and spheralization, that is, ball milling for 6 hours to polymerize the particles into spherical shape. Then, the mixture was subjected to carbonization and decomposition of the pore-forming agent at a high temperature of 1000°C, with a holding time of 2 hours at 1000°C, then naturally cooled to room temperature, and the negative electrode active material of Example 1 was obtained.

Preparation of negative electrode

The foregoing negative electrode active material, additive, binder styrene-butadiene rubber (SBR for short), and thickener sodium carboxymethyl cellulose (CMC for short) were mixed at a weight ratio of 95.7:1.5:1.8:1 and fully stirred and mixed in an appropriate amount of deionized water solvent, to form a uniform negative electrode slurry; and the slurry was applied onto Cu foil of a current collector, followed by drying and cold pressing, to produce the negative electrode plate.

Preparation of positive electrode

Lithium iron phosphate (chemical formula: $LiFePO_4$), conductive agent acetylene black, and binder polyvinylidene fluoride (PVDF for short) at a weight ratio of 96.3:2.2:1.5 were fully stirred and mixed in an appropriate amount of N-methylpyrrolidone (NMP for short) solvent, to form a uniform positive electrode slurry; and the slurry was applied onto Al foil of a current collector, followed by drying and cold pressing, to produce a positive electrode plate.

Preparation of electrolyte

In a dry glove box with argon atmosphere, ethylene carbonate (EC), propylene carbonate (PC), ethyl methyl carbonate (EMC), and diethyl carbonate (DEC) were mixed at a mass ratio of EC:PC:EMC:DEC=1:3:3:3, then fluoroethylene carbonate and 1,3- propane sultone were added, dissolved, and fully stirred. Then lithium salt $LiPF_6$ was added and well mixed to produce an electrolyte solution. A mass percentage of $LiPF_6$ was 12.5%, a mass percentage of fluoroethylene carbonate was 2%, and a mass percentage of 1,3- propane sultone was 2%. The mass percentage of each substance was calculated based on the mass of the electrolyte solution.

Preparation of separator

The polyethylene porous polymer film with a thickness of 9 $\mu$m was used as a separator.

Preparation of lithium-ion battery

The positive electrode, the separator, and the negative electrode were stacked in order, so that the separator was located between the positive electrode and the negative electrode for separation, and then the stack was wound to obtain an electrode assembly; after tabs were welded, the electrode assembly was placed in an outer packaging aluminum foil plastic film; and the prepared electrolyte solution was injected into the dried electrode assembly, and a lithium-ion battery was produced after processes such as vacuum packaging, standing, formation, shaping, and capacity testing were performed.

**Examples 2 to 10 and Comparative examples 1 to 5**

Preparation of negative electrode active material

The negative electrode active material was prepared in a process similar to that in Example 1, except that the corresponding negative electrode active material was prepared by adjusting parameters such as proportion of the flake graphite, amount of the pore-forming agent, spheroidizing time, and temperature of high-temperature treatment, that the quality of asphalt was maintained at one fifth of that of the artificial graphite, and that the holding time of 2 hours remained unchanged. Specific preparation parameters are shown in Table a.

**Table a**

| Examples | Artificial graphite (kg) | Flake graphite (kg) | Amount of pore-forming agent (kg) | Spheroidizing time (h) | Temperature of high-temperature treatment (°C) |
|---|---|---|---|---|---|
| Example 1 | 100 | 50 | 4 | 6 | 1000 |
| Example 2 | 100 | 40 | 5 | 6 | 1000 |
| Example 3 | 100 | 50 | 4 | 8 | 1100 |
| Example 4 | 100 | 50 | 4 | 6 | 1100 |
| Example 5 | 90 | 50 | 4 | 6 | 1000 |
| Example 6 | 90 | 40 | 3.5 | 5 | 1000 |
| Example 7 | 90 | 50 | 3.5 | 5 | 1000 |
| Example 8 | 90 | 40 | 3 | 7 | 1100 |
| Example 9 | 90 | 40 | 3.5 | 7 | 1100 |
| Example 10 | 70 | 25 | 3 | 6 | 1000 |
| Comparative example 1 | 100 | 0 | 4 | 6 | 1000 |
| Comparative example 2 | 100 | 50 | 0 | 6 | 1000 |
| Comparative example 3 | 100 | 50 | 4 | 1 | 1000 |
| Comparative example 4 | 100 | 50 | 4 | 1 | 300 |
| Comparative example 5 | 5 | 50 | 4 | 6 | 1000 |

The negative electrode, positive electrode, separator, electrolyte solution, and lithium-ion battery were prepared as in Example 1.

**Examples 11 to 18**

Preparation of negative electrode active material

The negative electrode active material was prepared in a process similar to that in Example 5, except that the quantity percentage of the first particles was adjusted by adjusting the amount of the pore-forming agent. The amount of the pore-forming agent was 4.2 kg, 4.3 kg, 4.4 kg, 4.5 kg, 4.6 kg, 4.7 kg, 4.8 kg, and 5.0 kg in the preparation processes of Examples 11 to 18, respectively.

The negative electrode, positive electrode, separator, electrolyte solution, and lithium-ion battery were prepared as in Example 5.

**Examples 19 to 23**

Preparation of negative electrode active material

The negative electrode active material was prepared in a process similar to that in Example 14, except that the ID/IG value of the negative electrode active material layer was adjusted by adjusting the high-temperature treatment temperature. In the preparation processes of Examples 19 to 23, the high-temperature treatment temperature was 990°C, 980°C, 970°C, 960°C, and 950°C, respectively.

The negative electrode, positive electrode, separator, electrolyte solution, and lithium-ion battery were prepared as in Example 14.

**Examples 24 to 39**

Preparation of negative electrode active material

The negative electrode active material was prepared in a process same as that in Example 21.

For the preparation of negative electrode, the negative electrode was prepared in a process similar to that in Example 21, except that the OI value and porosity of the negative electrode plate were adjusted by adjusting the spheroidizing time. In the preparation process of Examples 24 to 39, the spheroidizing time was 5.3 h, 5.4 h, 5.5 h, 5.6 h, 5.7 h, 5.8 h, 5.9 h, 6.0 h, 6.1 h, 6.2 h, 6.3 h, 6.4 h, 6.5 h, 6.6 h, 6.7 h, and 6.8 h, respectively.

The positive electrode, separator, electrolyte solution, and lithium-ion battery were prepared as in Example 21.

**Examples 40 to 50**

Preparation of negative electrode active material

The negative electrode active material was prepared in a process similar to that in Example 38, except that the mass of the artificial graphite remained unchanged at 90 kg, and the gram capacity and specific surface area of the negative electrode active material were adjusted by adjusting the mass of the flake graphite. In the preparation process of Examples 40 to 50, the mass of the flake graphite was 53 kg, 60 kg, 51 kg, 65 kg, 52 kg, 54 kg, 55 kg, 56 kg, 57 kg, 58 kg, and 59 kg, respectively.

The negative electrode, positive electrode, separator, electrolyte solution, and lithium-ion battery were prepared as in Example 38.

**Test method**

**1. Tests for maximum Feret diameter and percentage of the quantity of first particles with pores**

Preparation process of negative electrode plate samples with argon ion polishing (CP): A lithium-ion battery was disassembled to obtain a negative electrode plate, the negative electrode plate was cut into 6.0 mm × 6 mm size and fixed on a sample table, and an end with the negative electrode active substance layer was treated with argon ion polishing (parameters: 6 KV accelerated voltage, 3 hours per sample) to obtain a negative electrode active material layer sample with CP.

The prepared negative electrode active material layer sample with CP was analyzed using scanning electron microscope (SEM).

The scanning electron microscope used in this application is a JSM-6360LV model of JEOL Company.

Maximum Feret diameter of pore structure cross-section: The negative electrode active material layer sample with CP was observed, and within a 200 $\mu$m × 200 $\mu$m region of a cross-section of the negative electrode active material layer along thickness direction, there were some particles with pore structure, and the pore cross-section of the particles was irregularly shaped. The Feret diameter refers to a distance between two boundary parallel lines of the pore cross-section of the particles measured along a specific direction, and the longest distance is the maximum Feret diameter of the pore cross-section. For a pore cross-section in a particle, two parallel lines are rotated around the outer tangent of the pore cross-section for one revolution, and a size with the longest distance between the parallel lines at a position is the maximum Feret diameter of the pore structure cross-section. The maximum Feret diameters of all particle pore cross-sections in the 200 $\mu$m × 200 $\mu$m region of the negative electrode active material layer were measured in turn, and an average value was calculated to obtain an average maximum Feret diameter a of the pore structure cross-sections in the cross-section of the negative electrode active material layer along thickness direction.

Maximum Feret diameter of cross-sections of active material particles with pores: A negative electrode active material layer sample with CP was observed, and within a 200 $\mu$m × 200 $\mu$m region of a cross-section of the negative electrode active material layer along thickness direction, there were cross-sections of a certain quantity of particles, and these cross-sections were irregularly shaped. The Feret diameter refers to a distance between two boundary parallel lines of the particle cross-section measured along a specific direction, and the longest distance is the maximum Feret diameter of the particle cross-section. For a particle cross-section, two parallel lines are rotated around the outer tangent of the particle for one revolution, and a size with the longest distance between the parallel lines at a position is the maximum Feret diameter of the particle cross-section. The maximum Feret diameters of all particles in the 200 $\mu$m × 200 $\mu$m region of the negative electrode active material layer were measured in turn, and an average value was calculated to obtain the average maximum Feret diameter b of the active particle cross-sections in the cross-section of the negative electrode active material layer along thickness direction.

Percentage of the quantity of the first particles to a sum of the quantity of the first particles and the quantity of the second particles: A 200 $\mu$m × 200 $\mu$m region of a cross-section of the negative electrode active material layer was selected, and a total quantity of particles in that region was counted. The total quantity was a sum of the quantity of the first particles and the quantity of the second particles. The quantity of active material particles with pores in this region was counted. The quantity was the quantity of the first particles.

### 2. Powder compacted density test

For the test standard of powder compacted density, refer to GB/T 24533-2009 "Graphite Negative Electrode Materials for Lithium-Ion Battery". The specific test method was as follows: 1.0000±0.0500 g of the negative electrode active material sample was weighted and placed in a test mold (CARVER#3619 (13mm)), and the sample was then put in a test device, where the test device was SUNS UTM7305, a test tonnage was 0.3 t, 0.5 t, 0.75 t, 1.0 t, 1.5 t, 2.0 t, 2.5 t, 3.0 t, 4.0 t, or 5.0 t, a pressure increase rate was 10 mm/min, a pressure increase holding time was 30 s, a pressure release rate was 30 mm/min, and a pressure release holding time was 10 s.

In this application, the powder compacted densities were compacted densities measured after being pressed at a pressure of 5t. The formula for calculating the compacted density is: compacted density = material mass/(material stress area × sample thickness).

### 3. Raman test for negative electrode active material layer

An area with a size of 100 $\mu$m × 100 $\mu$m on the cross-section of the negative electrode active material layer was selected, and the particles within the area were scanned using a laser micro confocal Raman spectrometer (Raman, HR Evolution, HORIBA Scientific Instruments Division) to obtain D and G peaks for all the particles within the area range. Data was processed using LabSpec software to obtain peak intensities of the D peak and G peak for each particle, denoted as ID and IG, respectively. A normal distribution diagram was obtained by counting the frequency of ID/IG with a step size of 0.02, (ID/IG)max and (ID/IG)min of these particles were counted, and an average value of IDIG, the ID/IG value of the negative electrode active material layer, was calculated. The laser wavelength of Raman spectrometer can be in the range of 532 nm to 785 nm.

D peak generally appears around 1350cm$^{-1}$ and is caused by the symmetric stretching vibration radial breathing mode of sp2 carbon atom in aromatic ring (structural defect).

G peak appears around 1580 cm$^{-1}$ and is caused by tensile vibration between sp2 carbon atoms, corresponding to the vibration of E2g optical phonon in the center of Brillouin zone (in-plane vibration of carbon atoms).

### 4. Porosity test for negative electrode plate

Analysis principle: gas displacement method, where the Archimedes principle of gas driving (density = mass/volume) was applied and the Boyle's law of inert gas with small molecular diameters under certain conditions (PV = nRT) was used to accurately measure a true volume of the material under test, thus obtaining its true density and porosity.

Test: the electrode plate was cut into small squares of 10 mm × 10 mm, and the sample quality was weighed. Then the sample was placed in a true density testing instrument (model: AccuPyc II1340), and the testing system was sealed. Nitrogen gas was introduced according to the condition, and the true volume V2 was calculated according to the Boyle's law (PV = nRT) by measuring the pressure of gas in the sample chamber and expansion chamber. Apparent volume V1 = S × H (S is the surface area of the sample and H is the thickness of the sample), and the porosity K was then calculated, where K = (V1-V2)/V1 × 100%.

### 5. OI value test for negative electrode plate

The (004) plane diffraction pattern and (110) plane diffraction pattern in the X-ray diffraction pattern of the negative electrode active material layer were tested according to "Determination Method of Artificial Graphite Lattice Parameters", JB/T 4220-2011, a mechanical industry standard of the People's Republic of China. The test conditions were as follows: The X-ray was implemented by CuK$\alpha$ radiation, and the CuK$\alpha$ radiation was removed by a filter or a monochromator. A working voltage of an X-ray tube was (30-35) kV, and the working current of the X-ray tube was (15-20) mA. A scanning speed of a counter was 1/4 (°)/min. In recording a 004 diffraction line pattern, a scanning range of a diffraction angle 2θ is 53°-57°. In recording a 110 diffraction line pattern, a scanning range of a diffraction angle 2θ is 75°-79°. A peak area obtained from the diffraction line pattern of the (004) surface was recorded as C004. A peak area obtained from the diffraction line pattern of the (110) surface was recorded as C110. A calculated ratio of C004/C110 of the negative electrode plate was an OI value of the negative electrode plate.

### 6. DCR test for lithium-ion battery

At 25°C in a fully charged state, the process was as follows:

(1) Charged with 1C direct current (DC) to 2.5 V;

(2) Left standing for 10 minutes;
(3) Charged with 1C constant current (CC) to 3.6 V, and with a constant voltage (CV) to 0.05C; and discharged in 0°C environment, at a temperature of 0°C;
(4) Left standing for 60 minutes;
(5) 0.1C DC 10s, 1.5C DC 1s;
(6) Left standing for 10 minutes;
(7) 1C DC 8 minutes;
(8) Left standing for 30 minutes; and
(9) Repeat steps (5) to (8) for 11 times;

(The protection voltage was set to 2.0 V). The impedance DCR of the battery at 50% SOC was taken, and the test was completed.

**7. Discharge temperature rise test for lithium-ion battery**

(1) The furnace temperature was adjusted to 25°C, and the battery was left stand for 30 minutes;

(2) 0.5 C DC to 2.5 V;

(3) Left standing for 30 minutes;

(4) 1C CC to 3.6 V, and CV to 0.05C;

(5) Left standing for 60 minutes;

(5) Testing the temperature T1 at the center of the battery surface;

(6) 3C DC to 2.5 V;

(7) Left standing for 1 minute;

(8) Testing the temperature T2 at the center of the battery surface; and

(9) Temperature rise T = T2 - T1, and the test was over.

**Test result**

Table 1 shows, within the 200 $\mu$m $\times$ 200 $\mu$m region of a cross-section of the negative electrode active material layer, the influence of the average maximum Feret diameter a $\mu$m of pores in the first particles with pores, the average maximum Feret diameter b $\mu$m of the first particles with the pores, and the compacted density C g/m$^3$ of the negative electrode active material under 5t pressure, on the performance of lithium-ion batteries.

**Table 1**

| Examples and Comparative examples | Average maximum Feret diameter a of pores in first particles ($\mu$m) | Average maximum Feret diameter b of first particles ($\mu$m) | a/b | Compacted density C of negative electrode active material under 5t pressure (g/cm$^3$) | 0.98 $\times$ C-(a/b)$^2$ | DCR (m$\Omega$) | Temperature rise T (°C) |
|---|---|---|---|---|---|---|---|
| Example 1 | 0.5 | 5.0 | 0.10 | 1.83 | 1.78 | 53.0 | 6.5 |
| Example 2 | 0.7 | 4.7 | 0.15 | 1.89 | 1.83 | 51.1 | 6.2 |
| Example 3 | 1.0 | 4.5 | 0.22 | 1.95 | 1.86 | 48.3 | 5.7 |
| Example 4 | 2.0 | 7.1 | 0.28 | 1.88 | 1.76 | 47.5 | 5.5 |

(continued)

| Examples and Comparative examples | Average maximum Feret diameter a of pores in first particles ($\mu$m) | Average maximum Feret diameter b of first particles ($\mu$m) | a/b | Compacted density C of negative electrode active material under 5t pressure (g/cm$^3$) | $0.98 \times$ C-(a/b)$^2$ | DCR (m$\Omega$) | Temperature rise T (°C) |
|---|---|---|---|---|---|---|---|
| Example 5 | 4.0 | 11.4 | 0.35 | 1.81 | 1.65 | 45.0 | 5.2 |
| Example 6 | 8.0 | 15.1 | 0.53 | 1.76 | 1.44 | 46.5 | 5.9 |
| Example 7 | 11.0 | 13.9 | 0.79 | 1.67 | 1.01 | 50.2 | 6.6 |
| Example 8 | 13.0 | 15.3 | 0.85 | 1.65 | 0.89 | 52.3 | 6.7 |
| Example 9 | 0.4 | 4.0 | 0.10 | 1.75 | 1.13 | 54.2 | 6.9 |
| Example 10 | 11.5 | 23.0 | 0.50 | 1.83 | 1.05 | 54.3 | 7.0 |
| Comparative example 1 | 1.5 | 30.0 | 0.05 | 1.97 | 1.93 | 60.9 | 12.8 |
| Comparative example 2 | 3.0 | 37.5 | 0.08 | 1.92 | 1.88 | 59.8 | 11.5 |
| Comparative example 3 | 12.0 | 14.5 | 0.83 | 1.96 | 1.23 | 62.3 | 13.6 |
| Comparative example 4 | 2.5 | 2.9 | 0.86 | 1.64 | 0.87 | 65.5 | 14.5 |
| Comparative example 5 | 1.7 | 1.8 | 0.93 | 1.84 | 0.94 | 67.8 | 16.2 |

It can be seen from data in Table 1 that when the average maximum Feret diameter a $\mu$m of pores in the first particles, the average maximum Feret diameter b of the first particles with the pores, and the compacted density C of the negative electrode active material under 5t pressure satisfies that $0.10 \leq a/b \leq 0.85$, $1.65 \leq C \leq 1.95$, and $0.89 \leq 0.98 \times C - (a/b)^2 \leq 1.86$, the lithium-ion batteries have a low impedance DCR and a low discharge temperature rise T.

Table 2 shows, within the 200 $\mu$m $\times$ 200 $\mu$m region of a cross-section of the negative electrode active material layer, the influence of a percentage of the quantity of the first particles with pores to a sum of the quantity of the first particles and the quantity of the second particles on the performance of the lithium-ion batteries. Except the parameters listed in Table 2, the remaining parameters of Examples 11 to 18 are the same as those of Example 5.

**Table 2**

| Examples | Percentage of quantity of first particles to sum of quantity of first particles and quantity of second particles | DCR (m$\Omega$) | Temperature rise T (°C) |
|---|---|---|---|
| Example 5 | 38.5% | 45.0 | 5.2 |
| Example 11 | 45.0% | 44.5 | 4.9 |
| Example 12 | 49.2% | 43.1 | 4.6 |
| Example 13 | 55.1% | 42.3 | 4.5 |
| Example 14 | 60.5% | 40.5 | 4.2 |
| Example 15 | 68.7% | 41.0 | 4.4 |
| Example 16 | 75.6% | 42.3 | 4.7 |
| Example 17 | 88.3% | 43.5 | 4.9 |
| Example 18 | 95.0% | 43.9 | 5.0 |

As can be seen from Table 2 that when the percentage of the quantity of the first particles to the total quantity of particles in this region is within the range of 40% to 95%, the pore structure in the negative electrode plate is well-developed, the negative electrode plate has a specific mechanical strength, and the lithium-ion batteries can exhibit excellent discharge temperature rise performance.

Table 3 shows, within the 200 $\mu$m $\times$ 200 $\mu$m region of a cross-section of the negative electrode active material layer, the influence of the ratio of ID/IG on the performance of the lithium-ion batteries. Except the parameters listed in Table 3, the remaining parameters of Examples 19 to 23 are the same as those of Example 14.

**Table 3**

| Examples | ID/IG ratio | DCR (mΩ) | Temperature rise T (°C) |
|---|---|---|---|
| Example 14 | 0.13 | 40.5 | 4.2 |
| Example 19 | 0.15 | 39.5 | 4.0 |
| Example 20 | 0.22 | 38.1 | 3.8 |
| Example 21 | 0.35 | 36.5 | 3.6 |
| Example 22 | 0.43 | 38.7 | 3.7 |
| Example 23 | 0.50 | 39.2 | 3.8 |

It can be seen from the results in Table 3 that the impedance and temperature rise of the lithium-ion batteries are reduced when the ID/IG ratio ranges from 0.15 to 0.50. As compared with Example 14, the impedance DCR in Examples 19 to 23 is decreased, and the discharge temperature rise T is reduced, indicating that an appropriate defect degree is beneficial for the performance of the lithium-ion batteries.

Table 4 shows the influence of the OI value, porosity K, and thickness H of the negative electrode plate on the performance of the lithium-ion batteries. Except the parameters listed in Table 4, the remaining parameters of Examples 24 to 39 are the same as those of Example 21.

**Table 4**

| Examples | OI value of negative electrode plate | Porosity K of negative electrode plate | Thickness H of negative electrode plate ($\mu$m) | DCR (mΩ) | Temperature rise T (°C) |
|---|---|---|---|---|---|
| Example 21 | 26 | 15% | 230 | 36.5 | 3.6 |
| Example 24 | 24 | 18% | 185 | 35.5 | 3.4 |
| Example 25 | 16 | 45% | 190 | 35.2 | 3.3 |
| Example 26 | 27 | 25% | 188 | 34.9 | 3.5 |
| Example 27 | 29 | 37% | 202 | 35.1 | 3.3 |
| Example 28 | 30 | 18% | 110 | 35.0 | 3.4 |
| Example 29 | 33 | 46% | 170 | 35.1 | 3.3 |
| Example 30 | 22 | 23% | 185 | 34.3 | 3.0 |
| Example 31 | 17 | 35% | 193 | 33.9 | 2.9 |
| Example 32 | 18 | 19% | 90 | 33.5 | 2.7 |
| Example 33 | 20 | 41% | 70 | 34.1 | 3.3 |
| Example 34 | 26 | 25% | 60 | 33.1 | 3.0 |
| Example 35 | 29 | 30% | 88 | 32.8 | 2.8 |
| Example 36 | 15 | 32% | 106 | 32.0 | 2.5 |
| Example 37 | 16 | 23% | 90 | 30.5 | 2.3 |
| Example 38 | 16 | 35% | 86 | 29.2 | 2.1 |
| Example 39 | 22 | 26% | 102 | 31.1 | 2.4 |

It can be seen from the results in Table 4 that when the negative electrode plate satisfies the condition that the OI value is ≤ 25, lithium ions can quickly deintercalate and intercalate in the negative electrode plate, thereby reducing the impedance and discharge temperature rise of the lithium-ion batteries. When the porosity K of the negative electrode plate is within the range of 15% to 50%, the diffusion impedance of lithium ions is low, the compacted density of the electrode plate is high, and the discharge performance of the lithium-ion batteries is effectively improved.

Table 5 shows the influence of the graphitization degree G, gram capacity Cap, and specific surface area BET of the negative electrode active material on the performance of the lithium-ion batteries. Except the parameters listed in Table 5, the remaining parameters of Examples 40 to 50 are the same as those of Example 38.

**Table 5**

| Examples | Graphitization degree G of negative electrode active material | Gram capacity of negative electrode active material Cap (mAh/g) | Specific surface area of negative electrode active material BET (m²/g) | DCR (mΩ) | Temperature rise T (°C) |
|---|---|---|---|---|---|
| Example 38 | 92.5% | 332 | 5.0 | 29.2 | 2.1 |
| Example 40 | 93.6% | 342 | 5.5 | 28.0 | 1.9 |
| Example 41 | 95.8% | 353 | 5.0 | 27.8 | 1.8 |
| Example 42 | 92.5% | 335 | 1.5 | 27.9 | 1.8 |
| Example 43 | 98.5% | 368 | 3.5 | 27.5 | 1.7 |
| Example 44 | 93.2% | 341 | 1.2 | 27.1 | 1.5 |
| Example 45 | 94.1% | 345 | 1.9 | 26.5 | 1.3 |
| Example 46 | 94.7% | 348 | 2.2 | 26.4 | 1.3 |
| Example 47 | 95.5% | 352 | 2.1 | 26.1 | 1.2 |
| Example 48 | 96.8% | 359 | 2.5 | 26.3 | 1.3 |
| Example 49 | 97.2% | 362 | 3.6 | 25.9 | 1.2 |
| Example 50 | 97.9% | 366 | 3.1 | 26.2 | 1.2 |

As shown in Table 5, when the graphitization degree G of the negative electrode active material is within the range of 93.0% to 98.0%, the gram capacity Cap is ≥ 340 mAh/g, and the BET is ≤ 2.5 m²/g, the impedance and temperature rise of the lithium-ion batteries are obviously reduced.

Although illustrative embodiments have been demonstrated and described, a person skilled in the art should understand that the foregoing embodiments are not to be construed as limiting this application, and that the embodiments may be changed, replaced, and modified without departing from the spirit, principle, and scope of this application.

**Claims**

1.    A negative electrode plate comprising a negative electrode current collector and a negative electrode active material layer disposed on the negative electrode current collector; wherein the negative electrode active material layer comprises a negative electrode active material, the negative electrode active material comprises first particles with pores and second particles other than the first particles, wherein

within a 200 μm × 200 μm region of a cross-section of the negative electrode active material layer, the first particles satisfy: $0.10 \leq a/b \leq 0.85$ and $0.89 \leq 0.98 \times C - (a/b)^2 \leq 1.86$; wherein
a μm represents an average maximum Feret diameter of the pores in the first particles; b μm represents an average maximum Feret diameter of the first particles; and
C g/cm³ represents a compacted density of the negative electrode active material under 5t pressure, wherein $1.65 \leq C \leq 1.95$.

2.    The negative electrode plate according to claim 1, wherein the negative electrode plate satisfies at least one of the following conditions (i) to (v):

(i)

$$0.15 \leq a/b \leq 0.7;$$

(ii)

$$1.2 \leq 0.98 \times C - (a/b)^2 \leq 1.86;$$

(iii)

$$1.7 \leq C \leq 1.9;$$

(iv)

$$0.5 \leq a \leq 13;$$

or
(v)

$$4 \leq b \leq 25.$$

3. The negative electrode plate according to claim 1, wherein the negative electrode plate satisfies at least one of the following conditions (vi) to (ix):

(vi)

$$0.2 \leq a/b \leq 0.6;$$

(vii)

$$1.3 \leq 0.98 \times C - (a/b)^2 \leq 1.8;$$

(viii)

$$1 \leq a \leq 10;$$

or
(ix)

$$4.5 \leq b \leq 16.$$

4. The negative electrode plate according to claim 1, wherein within the 200 $\mu$m $\times$ 200 $\mu$m region of the cross-section of the negative electrode active material layer, a quantity of the first particles accounts for 35% to 95% of a sum of the quantity of the first particles and a quantity of the second particles; and/or within the 200 $\mu$m $\times$ 200 $\mu$m region of the cross-section of the negative electrode active material layer, in a Raman testing, the negative electrode active material layer satisfies: $0.1 \leq ID/IG \leq 0.5$, wherein ID is an intensity of a peak at 1350 cm$^{-1}$ in a Raman spectrum, and IG is an intensity of a peak at 1580 cm$^{-1}$ in the Raman spectrum.

5. The negative electrode plate according to claim 4, wherein the quantity of the first particles accounts for 50% to 80% of the sum of the quantity of the first particles and the quantity of the second particles; and/or, $0.2 \leq ID/IG \leq 0.45$.

6. The negative electrode plate according to claim 1, wherein the negative electrode plate satisfies at least one of the following conditions (vi) to (viii):

(x) an orientation index OI of the negative electrode plate satisfies: OI $\leq$ 35;
(xi) a porosity K of the negative electrode plate satisfies: 15% $\leq$ K $\leq$ 50%; or

(xii) a thickness H of the negative electrode plate satisfies: $H \leq 220$ μm.

7. The negative electrode plate according to claim 1, wherein the negative electrode plate satisfies at least one of the following conditions (ix) to (xii):

(xiii) a graphitization degree G of the negative electrode active material satisfies: $92\% \leq G \leq 98\%$;
(xiv) a gram capacity Cap of the negative electrode active material satisfies: $Cap \geq 330$ mAh/g;
(xv) a specific surface area BET of the negative electrode active material satisfies: $1.0\ m^2/g \leq BET \leq 4.5\ m^2/g$; or
(xvi) the negative electrode active material comprises graphite.

8. A secondary battery comprising the negative electrode plate according to any one of claims 1 to 7.

9. The secondary battery according to claim 8, wherein an impedance DCR of the secondary battery when discharged to 50%SOC at 0°C 1C satisfies: $DCR \leq 55.0$ mΩ, and/or
when the secondary battery is discharged at 25°C 3C, a temperature rise T satisfies: $T \leq 8.0°C$.

10. An electronic apparatus comprising the secondary battery according to claim 8 or 9.

FIG. 1

FIG. 2

## INTERNATIONAL SEARCH REPORT

| | International application No. |
|---|---|
| | **PCT/CN2022/115828** |

| **A.** | **CLASSIFICATION OF SUBJECT MATTER** |
|---|---|

H01M4/13(2010.01)i;H01M4/36(2006.01)i;H01M10/0525(2010.01)i

According to International Patent Classification (IPC) or to both national classification and IPC

| **B.** | **FIELDS SEARCHED** |
|---|---|

Minimum documentation searched (classification system followed by classification symbols)

    IPC：H01M

Documentation searched other than minimum documentation to the extent that such documents are included in the fields searched

Electronic data base consulted during the international search (name of data base and, where practicable, search terms used)

    CNABS; CNTXT; CNKI; WPABS; DWPI; USTXT; WOTXT; EPTXT; ISI: 宁德新能源, 时代, 金文博, 负极, 负电极, 阳极, 极片, 颗粒, 粒子, 孔, 费雷特, 径, 最大, 压实密度, 截面, 压力, negative, electrode?, anode, grain, particle, pore?, porous, feret, diameter, max, compact+, density, section, press+

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| Y | CN 102237512 A (BYD CO., LTD.) 09 November 2011 (2011-11-09)<br>    description, paragraphs [0006]-[0113], and figures 1 and 2 | 1-10 |
| Y | CN 113086978 A (NINGDE AMPEREX TECHNOLOGY LTD.) 09 July 2021 (2021-07-09)<br>    description, paragraphs [0004]-[0158], and figure 1 | 1-10 |
| Y | CN 113471419 A (JINAN JINGZHI FANGZHENG NEW MATERIAL CO., LTD.) 01<br>October 2021 (2021-10-01)<br>    description, paragraphs [0009]-[0043] | 1-10 |
| Y | CN 103477473 A (COMMISSARIAT À L'ÉNERGIE ATOMIQUE ET AUX ÉNERGIES<br>ALTERNATIVES et al.) 25 December 2013 (2013-12-25)<br>    description, paragraphs [0011]-[0117], and figure 1 | 1-10 |
| A | CN 114127985 A (NINGDE AMPEREX TECHNOLOGY LTD.) 01 March 2022<br>(2022-03-01)<br>    entire document | 1-10 |

☑ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **06 March 2023** | **06 April 2023** |

| Name and mailing address of the ISA/CN | Authorized officer |
|---|---|
| **China National Intellectual Property Administration (ISA/<br>CN)<br>China No. 6, Xitucheng Road, Jimenqiao, Haidian District,<br>Beijing 100088** | |
| Facsimile No. **(86-10)62019451** | Telephone No. |

Form PCT/ISA/210 (second sheet) (July 2022)

**INTERNATIONAL SEARCH REPORT**

| International application No. |
| --- |
| **PCT/CN2022/115828** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 113228342 A (NINGDE AMPEREX TECHNOLOGY LTD.) 06 August 2021 (2021-08-06)<br>    entire document | 1-10 |
| A | CN 109417163 A (NEXEON LTD.) 01 March 2019 (2019-03-01)<br>    entire document | 1-10 |
| A | CN 114503298 A (UMICORE) 13 May 2022 (2022-05-13)<br>    entire document | 1-10 |
| A | KR 102417880 B1 (SK ON CO., LTD.) 06 July 2022 (2022-07-06)<br>    entire document | 1-10 |
| A | JP 2013008526 A (HITACHI CHEMICAL CO., LTD.) 10 January 2013 (2013-01-10)<br>    entire document | 1-10 |

Form PCT/ISA/210 (second sheet) (July 2022)

## INTERNATIONAL SEARCH REPORT
### Information on patent family members

| International application No. |
| --- |
| **PCT/CN2022/115828** |

| Patent document cited in search report | | | Publication date (day/month/year) | Patent family member(s) | | | Publication date (day/month/year) |
| --- | --- | --- | --- | --- | --- | --- | --- |
| CN | 102237512 | A | 09 November 2011 | CN | 102237512 | B | 18 December 2013 |
| CN | 113086978 | A | 09 July 2021 | WO | 2022205658 | A1 | 06 October 2022 |
| CN | 113471419 | A | 01 October 2021 | | None | | |
| CN | 103477473 | A | 25 December 2013 | US | 2013273433 | A1 | 17 October 2013 |
| | | | | KR | 20140025335 | A | 04 March 2014 |
| | | | | JP | 2014503972 | A | 13 February 2014 |
| | | | | WO | 2012093224 | A1 | 12 July 2012 |
| | | | | ES | 2518219 | T3 | 04 November 2014 |
| | | | | EP | 2661779 | A1 | 13 November 2013 |
| | | | | EP | 2661779 | B1 | 01 October 2014 |
| | | | | FR | 2970245 | A1 | 13 July 2012 |
| | | | | FR | 2970245 | B1 | 25 January 2013 |
| CN | 114127985 | A | 01 March 2022 | WO | 2022205152 | A1 | 06 October 2022 |
| CN | 113228342 | A | 06 August 2021 | WO | 2022140982 | A1 | 07 July 2022 |
| | | | | US | 2022231276 | A1 | 21 July 2022 |
| | | | | EP | 4050676 | A1 | 31 August 2022 |
| | | | | EP | 4050676 | A4 | 07 September 2022 |
| CN | 109417163 | A | 01 March 2019 | US | 2019148718 | A1 | 16 May 2019 |
| | | | | US | 11127945 | B2 | 21 September 2021 |
| | | | | WO | 2017216558 | A1 | 21 December 2017 |
| | | | | EP | 3469644 | A1 | 17 April 2019 |
| | | | | EP | 3469644 | B1 | 09 November 2022 |
| | | | | JP | 2019522872 | A | 15 August 2019 |
| | | | | JP | 6995786 | B2 | 17 January 2022 |
| | | | | KR | 20190018680 | A | 25 February 2019 |
| | | | | KR | 102413416 | B1 | 27 June 2022 |
| | | | | CN | 109417163 | B | 17 June 2022 |
| CN | 114503298 | A | 13 May 2022 | JP | 2022543502 | A | 12 October 2022 |
| | | | | EP | 4042496 | A1 | 17 August 2022 |
| | | | | WO | 2021069381 | A1 | 15 April 2021 |
| | | | | KR | 20220066180 | A | 23 May 2022 |
| | | | | KR | 102493546 | B1 | 30 January 2023 |
| | | | | US | 2022352493 | A1 | 03 November 2022 |
| KR | 102417880 | B1 | 06 July 2022 | EP | 4057384 | A2 | 14 September 2022 |
| | | | | EP | 4057384 | A3 | 28 September 2022 |
| | | | | US | 2022293944 | A1 | 15 September 2022 |
| | | | | CN | 115084493 | A | 20 September 2022 |
| JP | 2013008526 | A | 10 January 2013 | JP | 5927788 | B2 | 01 June 2016 |

Form PCT/ISA/210 (patent family annex) (July 2022)